# EUROPÄISCHE PATENTANMELDUNG

(11) **EP 1 246 332 A2**
(43) Veröffentlichungstag der Anmeldung: **02.10.2002**
(21) Anmeldenummer: 02005490.4
(22) Anmeldetag: 11.03.2002
(51) Int. Cl.: H02B 1/20

(54) **Installationsgerät für ein Sammelschienensystem**

(30) Priorität: 29.03.2001 DE 10115771
(71) Anmelder: Jean Müller GmbH Elektrotechnische Fabrik, D-65343 Eltville (DE)
(72) Erfinder:
(74) Vertreter: Quermann, Helmut, Dipl.-Ing.

(57) **Zusammenfassung**

Die Erfindung betrifft ein Installationsgerät mit von einem Gehäuseteil (2) oder dergleichen abstehenden Befestigungshaken (3) zum Einhängen des Gerätes auf Sammelschienen (12,13) eines Sammelschienensystems, wobei der jeweilige Haken mit mindestens einem von diesem irreversibel trennbaren Element (8) zur Anpassung an mindestens eine weitere (größere) Sammelschienendicke versehen ist.

Erfindungsgemäß wird vorgeschlagen, dass der Haken, bei abgetrenntem Element (8), der Aufnahme eines Elementes (14) zur Anpassung an eine kleinere Sammelschienendicke dient. Diese Element ist als separates Bauteil ausgebildet.

Das Installationsgerät ist gegenüber dem Stand der Technik bezüglich der Herstellung, Handhabung und Funktionalität optimiert.

## Beschreibung

Die Erfindung betrifft ein Installationsgerät mit von einem Gehäuseteil oder dergleichen abstehenden Befestigungshaken zum Einhängen des Gerätes auf Sammelschienen eines Sammelschienensystems, wobei der jeweilige Haken mit mindestens einem von diesem irreversibel trennbaren Element zur Anpassung an mindestens eine weitere (größere) Sammelschienendicke versehen ist.

Derartige Installationsgeräte sind beispielsweise als Reitersicherungssockel, Anschlussadapter, Geräteadapter ausgebildet. Bei bestimmten Sammelschienensystemen nehmen die Sammelschienen einen definierten Mittenabstand zueinander ein, auf den die Anordnung der Haken am Installationsgerät abgestimmt ist. Da die Sammelschienen bei den Sammelschienensystemen dann stets den gleichen Mittenabstand einnehmen, aber unterschiedliche Dicke aufweisen können, ergeben sich Schwierigkeiten bei der Auslegung der Installationsgeräte, wenn diese universell für verschieden dicke Sammelschienen eines Sammelschienensystems verwendet werden sollen. Aus dem Stand der Technik sind eine Vielzahl unterschiedlicher Lösungsansätze bei der Auslegung derartiger Installationsgeräte bekannt geworden, die allerdings kein Optimum, insbesondere unter den Gesichtspunkten der Herstellung, Handhabung und Funktionalität darstellen:

Gemäß der DE 34 28 738 A ist ein Installationsgerät, das unveränderliche Haken aufweist, bekannt. Dies bedingt, dass für jede Dicke der Stromschienen eigene Installationsgeräte erforderlich sind, die mit ihren Hakenabständen an die Dicke der jeweiligen Sammelschienen angepasst sind. Dies führt zu einer Vielzahl von Typen des Installationsgerätes.

Aus der DE-PS 33 09 360 ist ein Installationsgerät mit verstellbaren Haken bekannt. Solche verstellbaren Haken bedingen einen erheblichen Montageaufwand beim Aufsetzen des Installationsgerätes auf die Sammelschienen. Da mit dem Verstellen der Klemmhaken auch die Kontaktgabe zwischen den Sammelschienen und den im Gehäuse des Installationsgerätes festgelegten Kontaktschienen erfolgt, ist noch nicht sicher gestellt, dass an allen Sammelschienen eine gute elektrische Kontaktgabe gegeben ist, wenn vergessen wird, alle Stellschrauben zum Verstellen der Haken ausreichen gut anzuziehen.

In der EP 0 980 124 A2 ist ein Stand der Technik beschrieben, gemäß dem die Haken des Installationsgerätes mit in Richtung auf das Gehäuseteil weisenden Stegen versehen ist, welche den Raum für eine 5 mm starke Sammelschiene definieren. Für den Einsatz des Installationsgerätes bei Stromsammelschienen mit einer Schienenstärke von 10 mm ist es hierbei erforderlich, die Stege an den Haken über eine definierte Sollbruchstelle abzubrechen, wodurch ein Klemmraum für 10 mm dicke Sammelschienen entsteht. Nachteilig ist bei dieser Gestaltung, bei der die Stege irreversibel vom Haken trennbare Elemente darstellen, dass nach dem Abbrechen der Stege das Installationsgerät nicht mehr für die Anwendung bei den weniger starken Sammelschienen geeignet ist. - In der genannten Schrift ist ferner eine Ausführungsform beschrieben, bei der das Installationsgerät neben den Haken einen an diesem verstellbar angelenkten Schwenkbügel aufweist. In der einen Schwenkstellung des Bügels gibt ist dieser den Raum für die dickere Stromsammelschiene mit einer Stärke von 10 mm, in der anderen Schwenkstellung den Raum für eine Sammelschiene mit einer Stärke von 5 mm frei. Bei dieser Gestaltung ist von besonderem Nachteil, dass sie baulich äußerst aufwendig ist, insbesondere wegen des zusätzlichen Schwenkteils und der Schwenklagerung dieses Bauteils.

Aus der DE 297 21 445 U1 ist ein Installationsgerät bekannt, bei dem Ausgleichselemente auf die Haken aufsetzbar sind. Um das Installationsgerät an einem Sammelschienensystem mit Sammelschienen geringer Stärke montieren zu können, ist es zwingend erforderlich, die Haken mit den Ausgleichselementen zu versehen. Dies bedingt einen hohen Montageaufwand, abgesehen davon, dass die Distanzelemente vorgehalten werden müssen.

Alle beschriebenen Varianten sind somit im Handling aufwendig oder ermöglichen nicht, bei minimaler Bauteilevielfalt, die Installationsgeräte auf dickere Sammelschienenstärken umzustellen und gleichzeitig diesen Vorgang reversibel ablaufen zu lassen.

Aufgabe der Erfindung ist es ein Installationsgerät der genannten Art, wie es zum Stand der Technik in der EP 0 980 124 A2 beschrieben ist, insbesondere unter den Gesichtspunkten der Herstellung, Handhabung und Funktionalität weiter zu verbessern.

Gelöst wird die Aufgabe bei einem Installationsgerät der Eingangs genannten Art dadurch, dass der Haken, bei abgetrenntem Element, der Aufnahme eines Elementes zur Anpassung an eine kleinere Sammelschienendicke dient.

Erfindungsgemäß ist somit vorgesehen, dass das Installationsgerät so hergestellt wird, dass die Haken mit den von diesen trennbaren Elementen zur Anpassung an mindestens eine weitere, zwangsläufig größere Sammelschienendicke versehen sind, und, wenn diese Elemente von den Haken einmal getrennt sind, dieser Prozess reversibel ist, indem die Haken nunmehr separate bauteilebildende Elemente aufnehmen können, die statt der abgetrennten Elemente der Anpassung an eine kleinere Sammelschienendicke dienen.

Die erfindungsgemäße Lösung ermöglicht es Kunden, die üblicherweise 5 mm starke Sammelschienen einsetzen, die Installationsgeräte auf die eben so üblichen 10 mm starken Sammelschienen umzubauen wie auch umgekehrt. Der Prozess ist reversibel, ohne dass jedoch für die jeweilige Standard-Anwendung Mehrkosten entstehen.

Die Erweiterung der Abbrechlösung und die Möglichkeit, Zusatzteile zu ergänzen, hat wesentliche Vorteile:
- Es entstehen keine Mehrkosten für die Standard-Anwendungen. Die Kundenforderung nach 10 mm Adaption kann z.B. während der Montage in einer entsprechenden Vorrichtung einfach und automatisch vorgenommen werden.
- Jeder Kunde erhält seine übliche Anwendung einbaufertig.
- Der 5 mm Haken kann auch beim Kunden durch das Abbrechen von Teilen zum 10 mm Haken geändert werden.
- Durch ein als Massenware erhältliches Zusatzteil ist dieser Prozess umkehrbar.

Würde wie beim Stand der Technik ein Haken für eine Sammelschienendicke von 10 mm teilweise ab Werk mit Zusatzteilen für eine Schienendicke von 5 mm bestückt werden, hätte dies Mehrkosten ohne Zusatznutzen für die Standard-Anwendung zur Folge. Haken für 5 mm Schienesysteme mit der Möglichkeit durch das Abbrechen von Teilen die Verwendung auf 10 mm Schienen zu ermöglichen, stellt zwar eine preiswertere Lösung dar, gestattet allerdings keine Rückänderung.

Weitere Merkmale der Erfindung sind in den Patenansprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand einer Ausführungsform beispielsweise dargestellt, ohne auf diese beschränkt zu sein. Es zeigt:
Fig. 1 eine Seitenansicht des Installationsgerätes, bei dem die irreversibel von den Haken trennbaren Elementen noch mit dem Haken verbunden sind.
Fig.2 eine Darstellung des Installationsgerätes im Zusammenhang mit Sammelschienen unterschiedlicher Dicke für die drei unterschiedlichen Einbausituationen des Installationsgerätes.
Fig. 3 eine räumliche Ansicht eines Teiles des Installationsgerätes, schräg von unten gesehen, wobei des irreversibel trennbare Element noch mit dem Haken verbunden ist,
Fig. 4 das Installationsgerät in einer Ansicht gemäß Fig.3, allerdings nach dem Trennen des irreversibel trennbaren Elementes und dem Aufstecken des das separates Bauteil bildenden anderen Elements auf dem Haken, zwecks Anpassung an die kleinere Sammelschienendicke.

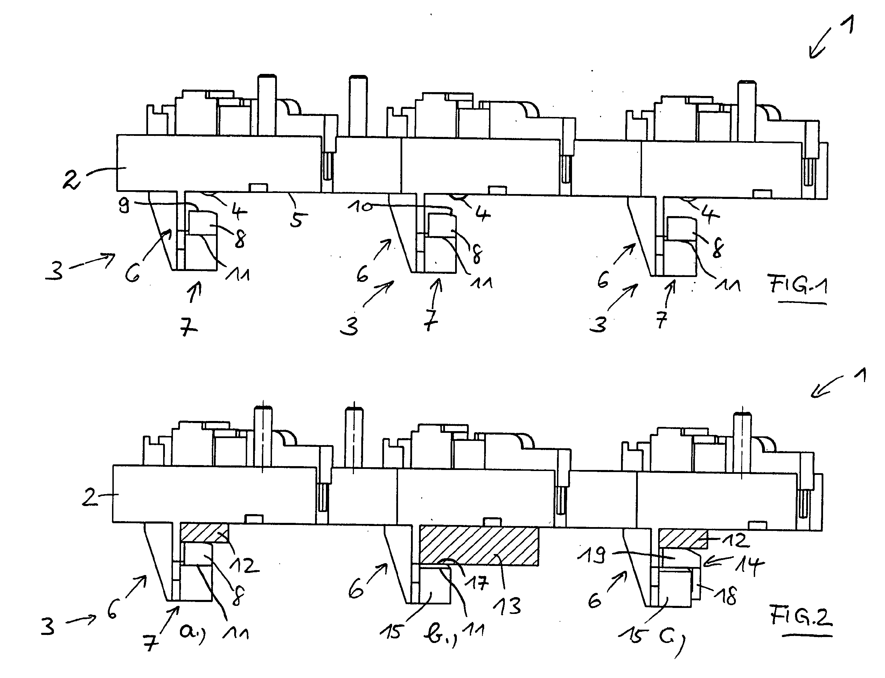

Die Figuren 1 und 2 zeigen in schematischer Seitendarstellung einen Geräteadapter z.B. für zylindrische Sicherungen, der gemäß vorliegender Erfindung auf unterschiedlich dicke Sammelschienen aufgesetzt wird, konkret solche mit einer Stärke von 5 mm oder 10 mm. Das Gehäuseteil 2 des Geräteadapters 1 weist entsprechend den drei Stromphasen 3 abstehende Befestigungshaken 3 zum Einhängen des Gehäuses 2 auf drei im Einzelfall identische Sammelschienen eines Sammelschienensystems auf. Im Gehäuse 2 sind nicht näher gezeigte Sicherungseinsätze angeordnet, die über gleichfalls nicht gezeigte Kontakte in stromleitender Verbindung stehen. Bezogen auf den Kontakt mit den Sammelschienen sind die jeweiligen Kontakte beispielsweise mit federnden Kontaktelementen 4 verbunden, die beim Einhängen des Gerätes auf die Sammelschienen diese leitend kontaktieren. Derjenige Bereich des Gehäuses 2, der im Bereich der Kontakte 4 die Sammelschienen kontaktiert, ist als ebene Fläche 5 ausgelegt.

Der jeweilige Haken 3 ist im Wesentlichen L-förmig ausgebildet und weist einen senkrecht zur Fläche 5 orientierten Schenkelabschnitt 6 und einen Fußabschnitt 7 auf, der etwa parallel und im Abstand zur ebenen Fläche 5 des Gehäuses 2 verläuft. Mit den Fußabschnitten 7 sind zwei parallel zueinander angeordnete Distanzplättchen 8 verbunden, deren Stirnflächen 9, abgesehen von einer Einführschräge 10, im Wesentlichen parallel zur ebenen Fläche 5 positioniert sind. Das jeweilige Distanzplättchen 8 ist über eine Sollbruchstelle 11 mit dem Fußabschnitt 7 verbunden. Das Gehäuse 2 und die Befestigungshaken 4, einschließlich der Distanzplättchen 8, bestehen aus Kunststoff und sind einteilig im Spritzgussverfahren hergestellt.

Bei der Verwendung des Installationsgerätes im Zusammenhang mit drei Sammelschienen mit einer Stärke von 5 mm stellt sich die Ausbildung der drei Befestigungshaken 3, wie in der Figur 1 veranschaulicht, dar. Die jeweilige Sammelschiene 12 mit einer Stärke von 5 mm wird, wie es in Figur 2 zum Anwendungsbeispiel a. gezeigt ist, zwischen das Gehäuse 2 im Bereich der ebenen Fläche 5 und die Stirnfläche 9 das Distanzplättchens 8 bewegt. Soll der Geräteadapter 1 im Zusammenhang mit 10 mm starken Sammelschienen 13 verwendet werden, werden alle Distanzplättchen 8 entlang der Sollbruchstelle 11, die als Linie ausgebildet ist, abgebrochen, so dass die Sammelschienen 13 zwischen die ebene Fläche 5 des Gehäuses 2 und den Fußabschnitt 7 eingeführt werden. Diese Situation ist in Figur 2 Beispiel b. veranschaulicht. Soll der Prozess reversibel gestaltet werden, dass heißt eine Umrüstung des Geräteadapters 1 von Sammelschienen der Stärke 10 mm auf solche der Stärke 5 mm erfolgen, wird ein Distanzelement 14 auf den Fußabschnitt 7 aufgesteckt, wobei die Stärke des Distanzelementes 14 entsprechend zu bemessen ist. Die Situation ist in Figur 2 gemäß Beispiel c. veranschaulicht.

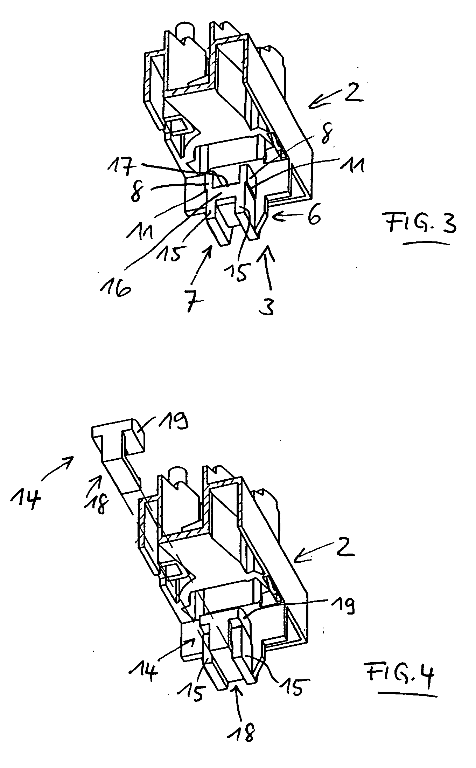

Die Figuren 3 und 4 verdeutlichen die konkrete Ausgestaltung des Gehäuses 2, eines Befestigungshakens 3, des mit diesen verbunden Distanzplättchens 8 und des auf den Haken 3 aufsteckbaren Distanzelementes 14.

Insbesondere der Figur 3 ist zu entnehmen, dass der Fußabschnitt 7 des Hakens 3 die Querschnittsform eines nach unten offenen U aufweist und sich die beiden Distanzplättchen 8 oben an die Schenkelbereiche 15 des Fußabschnittes 7 anschließen. Die Schenkelbereiche 15 des Fußabschnittes 7 verbindet ein Stegabschnitt 16, dessen Oberfläche 17 die Kontaktfläche zur Sammelschiene 13, gemäß der Situation in Figur 2, Abschnitt b. darstellt, wenn die Distanzplättchen 8 abgetrennt sind. Den Figuren ist deutlich zu entnehmen, dass diese obere Fläche 17 geringfügig oberhalb der Sollbruchstelle 11 liegt. Das Distanzelement weist, auf dessen Einschieberichtung gesehen, einen T-förmigen Querschnitt auf, wobei es durch einen L-förmigen Fußabschnitt 18 und einen mit diesem verbunden Dachabschnitt 19 gebildet ist. Die obere Fläche des Dachabschnittes 19 ist entsprechend der oberen Kontur des jeweiligen Distanzplättchens 8 ausgebildet, wobei der Dachabschnitt auf der oberen Fläche 17 des Stegabschnittes 16 des Fußabschnittes 7 aufliegt und der parallel zum Dachabschnitt 19 angeordnete Bereich des Fußabschnittes 18 federnd den Stegabschnitt 16 hintergreift. Das Distanzelement 14 ist gleichfalls als Kunststoffspritzgussteil ausgebildet.

In Figur 4 ist das Distanzelement 14 zweimal dargestellt, einmal vor dem Aufstecken auf den Fußabschnitt, einmal nach dem Aufstecken.

## Patentansprüche

1. Installationsgerät mit von einem Gehäuseteil (2) oder dergleichen abstehenden Befestigungshaken (3) zum Einhängen des Gerätes (1) auf Sammelschienen (12, 13) eines Sammelschienensystems, wobei der jeweilige Haken (3) mit mindestens einem von diesem irreversibel trennbaren Element (8) zur Anpassung an mindestens eine weitere Sammelschienendicke versehen ist, **dadurch gekennzeichnet, dass** der Haken (3), bei abgetrenntem Element (8), der Aufnahme eines Elementes (14) zur Anpassung an eine kleinere Sammelschienendicke dient.

2. Gerät nach Anspruch 1, **dadurch gekennzeichnet, dass** die Dicke des separaten Elementes (14) der Dicke des abtrennbaren Elementes (8) entspricht.

3. Gerät nach Anspruch 1 oder 2, **dadurch gekennzeichnet, dass** das separate Element (14) auf den Haken (3) aufsteckbar ist.

4. Gerät nach einem der Ansprüche 1 bis 3, **dadurch gekennzeichnet, dass** das Gehäuseteil (2), die Haken (3) und die abtrennbaren Elemente (8) ein Bauteil bilden, insbesondere ein Bauteil aus Kunststoff bilden.

5. Gerät nach einem der Ansprüche 1 bis 4, **dadurch gekennzeichnet, dass** das irreversibel trennbare Element (8) vom Haken (3) abbrechbar ist.

6. Gerät nach Anspruch 5, **dadurch gekennzeichnet, dass** das irreversibel trennbare Element (8) über eine Sollbruchstelle (11) mit dem Haken (3) verbunden ist.

7. Geräte nach einem der Ansprüche 1 bis 6, **dadurch gekennzeichnet, dass** die Kontaktfläche (17) des Hakens (3) mit der dieser die Sammelschiene (13) kontaktiert, gegenüber der Trennstelle (11) von Haken (3) und abtrennbarem Element (8) vorsteht.

8. Geräte nach einem der Ansprüche 1 bis 7, **dadurch gekennzeichnet, dass** der Haken (3) beiderseits der Kontaktfläche (17) mit der er die Sammelschiene (13) kontaktiert, mit einem abtrennbaren Element (8,8) versehen ist.
